# FASCICULE DE BREVET EUROPEEN

(11) **EP 1 928 120 B1**
(45) Date de publication et mention de la délivrance du brevet: **01.06.2011**
(21) Numéro de dépôt: 06360055.5
(22) Date de dépôt: 01.12.2006
(51) Int. Cl.: H04L 12/10, H04L 12/40

(54) **Bus de téléalimentation**
Fernversorgungsbus
Remote feeding bus

(43) Date de publication de la demande: 04.06.2008
(73) Titulaire: Hager Controls SAS, 67700 Saverne (FR)
(72) Inventeur: Paillard, Jean-Noël, 67000 Strasbourg (FR); Frommweiler, Olivier, 67700 Otterswiller (FR)
(74) Mandataire: Littolff, Denis

(56) Documents cités:
- EP-A- 1 006 422
- WO-A-2005/060173
- DE-A1- 4 201 468
- FR-A1- 2 876 512

## Description

La présente invention concerne un système électronique d'alimentation et de communication à bus de liaison entre un dispositif central et au moins un dispositif secondaire dialoguant en vue de l'obtention d'un résultat commun.

Il s'agit d'un bus dit de téléalimentation, utilisé généralement au sein d'un système doté d'un produit central qui fournit les alimentations et les ordres descendants à des produits secondaires, lesquels fournissent en retour des informations dites montantes.

Le bus de liaison est donc chargé de transmettre d'une part une alimentation à l'adresse de tous les produits secondaires, et d'autre part de véhiculer les communications / ordres dans un sens et dans l'autre pour faire fonctionner le système.

Parmi les solutions utilisées jusqu'ici, il existe notamment des liaisons que l'on peut qualifier de parallèles, c'est-à-dire qui utilisent simultanément une pluralité de fils pour la transmission de toutes les informations nécessitées pour la mise en oeuvre du système. Cette solution est chère, puisqu'elle multiplie les fils, et parfois peu pratique notamment lorsque les différents produits ou dispositifs entre lesquels les échanges d'informations sont effectués sont peu accessibles, les risques de déconnexion des lignes étant en effet proportionnels à leur nombre. La multiplication des liaisons, augmentant les risques de problèmes, diminue de plus la fiabilité globale du système.

Hormis cette possibilité, il existe des solutions numériques sur deux fils, utilisant par exemple la technique du pincement de ligne. Le produit central alimente les produits secondaires via une limitation de courant. Lorsqu'un des deux produits veut émettre un message sur le bus, il vient pincer celui-ci, c'est-à-dire qu'une surconsommation temporaire est appliquée sur le bus entraînant, du fait de cette limitation, une chute de la tension du bus.

Le produit destinataire lit alors les variations de tension pour décoder le message.

L'ensemble des messages transmis sur le bus est véhiculé sous forme numérique, ce qui implique notamment le respect de protocoles adéquat et d'un timing de transmission.

L'utilisation d'une technologie numérique impose d'avoir, dans le produit central et dans l'ensemble des produits secondaires, une unité de traitement capable de gérer la communication numérique (UART, USART). Cette gestion est notoirement gourmande en ressource mémoire vive et morte. En outre, l'importance du respect des durées de transmission des données nécessite de doter chaque produit d'horloges stables. Enfin, les communications doivent évidemment être immunisées contre les perturbations sur le bus (par exemple dues aux phénomènes transitoires). Les protections à mettre en oeuvre ne sont pas anodines, puisqu'il s'agit de filtres inductifs, capacitifs, etc.

Les solutions numériques à pincement de ligne engendrent par conséquent des surcoûts du fait de l'existence de ces périphériques, des ressources mémoires nécessaires à l'unité de traitement, d'horloges stables et à cause de la nécessité d'un filtrage pour protéger la communication contre les perturbations.

Ces surcoûts sont significatifs.

Le document D1 présente une solution pour un système de communication à bus de liaison entre un maître et un esclave, où les informations du maître sont communiquées en niveaux de tension et celles des esclaves en niveaux de courant.

L'invention se propose de remédier à ces inconvénients en proposant une liaison par bus envoyant des signaux analogiques sans pour autant multiplier le nombre de fils pour le bus.

A titre principal, le système d'alimentation et de communication de l'invention est tel que :
- le bus électronique comporte deux fils ;
- chaque produit comporte une unité de traitement programmable ;
- les informations / ordres provenant de l'unité de traitement du produit central sont communiqués en niveaux de tension sur le bus vers chaque produit secondaire ; et
- les informations / ordres émanant de l'unité de traitement de chaque produit secondaire sont émis sur le bus en niveaux de courant à destination du produit central.

Bien que la technologie utilisée soit purement analogique, la configuration de l'invention ne comporte qu'un bus bifilaire, c'est-à-dire le plus petit bus possible pour ce type d'application.

Les échanges de communication sont donc effectués dans un sens selon des niveaux de tension, et dans l'autre sens selon des niveaux de courant, ce qui permet les échanges d'informations simultanés sous forme analogique.

Le produit central et les produits secondaires doivent par conséquent être dotés de moyens de codage adéquats, c'est-à-dire des moyens de faire correspondre des niveaux de tension et/ou de courant à des informations précises. Celles-ci sont reconnues par les unités de traitement préprogrammées à cet effet. L'alimentation des produits secondaires doit de plus être assurée par le produit central simultanément à l'échange d'informations.

Ainsi, selon l'invention, le bus de liaison est relié à l'alimentation du produit central via un étage de régulation de tension, dont le niveau de tension en sortie dépend en outre d'un étage d'ajustement consistant en des transistors bipolaires dont les bases sont connectées à des sorties distinctes de l'unité de traitement dudit produit central, qui comporte un étage de lecture des informations / ordres du bus de liaison en provenance de chaque produit secondaire, ledit étage de lecture comprenant un étage de détection de présence du courant et d'au moins une autre information / ordre émanant d'un produit secondaire doté d'un nombre de transistors bipolaires égal au nombre de niveaux de courant à détecter, dont les sorties sont connectées aux entrées correspondantes de l'unité de traitement.

C'est l'étage d'ajustement qui permet, à partir des ordres reçus par l'unité de traitement, de fournir différents niveaux de tension à la source de tension ajustable, c'est-à-dire à l'étage de régulation de tension. Chaque niveau de tension correspond en fait à un ordre spécifique.

L'étage de régulation de tension peut par exemple être constitué d'un montage ballast à transistor bipolaire dont le collecteur est relié à l'alimentation, un pont de résistances étant placé entre le collecteur et la base d'une part, la base et la masse d'autre part.

Un tel montage ballast, très classique, permet l'obtention d'une tension régulée selon les valeurs des résistances constituant le pont.

L'étage d'ajustement, permettant ensuite de fournir différents niveaux de tension, s'applique au niveau du pont de résistances du montage ballast, et comporte des résistances de charge distinctes connectées en parallèle à la base du transistor du montage ballast.

Le résultat, comme on le verra plus en détail dans la suite, est le suivant : selon l'étage à transistor qui est commandé par une sortie de l'unité de traitement, une résistance différente est disposée en parallèle avec l'une des résistances du pont de l'étage de régulation, permettant de changer le niveau de la tension de référence.

Le système d'alimentation et de communication de l'invention peut également, de préférence, comporter un étage de protection contre les surcharges et courts-circuits.

Selon une possibilité, cet étage de protection peut être constitué d'une résistance connectée à l'émetteur du transistor du montage ballast, et placée entre la base et l'émetteur d'un transistor bipolaire dont le collecteur est raccordé à la base du transistor du montage / ballast.

On a mentionné la possibilité d'utiliser un étage de régulation de tension sous forme d'un montage ballast classique. Il est cependant possible d'utiliser d'autres solutions, comme par exemple une diode Zener ou un simple composant régulateur de tension.

Le produit central avec son alimentation, l'unité de traitement qui peut par exemple être un microprocesseur ou un microcontrôleur, les étages de production du niveau de tension puis de régulation de ladite tension à destination du bus, voire un étage de protection, n'est cependant pas complet : un tel produit ne peut pas se contenter d'envoyer des informations à destination du bus, mais doit aussi pouvoir en recevoir des produits secondaires. Il convient par conséquent de prévoir la réception et le décodage des informations émanant desdits produits secondaires. C'est la fonction de l'étage de lecture et de l'étage de détection constitué de transistors précités.

Les bases des transistors de l'étage de détection sont connectées pour chaque transistor en amont d'une résistance appartenant à une succession de résistances connectées en séries à un fil du bus de liaison.

Dans l'hypothèse où des transistors sont utilisés, leurs sorties sont connectées à des entrées distinctes de l'unité de traitement, les informations arrivant sur ces entrées étant ensuite gérées par celle-ci. L'entrée correspondant au niveau de courant le plus bas peut également être utilisée pour tester la présence d'un courant sur le bus et donc la présence ou l'absence d'un produit secondaire.

Dans l'hypothèse où le nombre de niveaux de courant à décoder est trop important, l'étage de lecture des informations / ordres provenant des produits secondaires peut consister en une résistance connectée au bus de liaison associée à un convertisseur analogique numérique dont la sortie est raccordée à l'unité de traitement.

Les produits secondaires comportent symétriquement un certain nombre d'étages / circuits permettant le décodage des niveaux de tension provenant du produit principal d'une part, et la génération de niveaux de courant en lien avec leur unité de traitement d'autre part. Secondairement, lesdits produits secondaires n'étant pas dotés d'une alimentation propre, il convient de traiter les signaux de tension véhiculés par le bus de manière à pouvoir les alimenter de manière appropriée.

En particulier, pour ce qui concerne le codage, les sorties d'informations / ordres de l'unité de traitement de chaque produit secondaire sont reliées au bus de liaison via un étage d'ajustement des niveaux de courant, niveaux qui sont ensuite régulés par un régulateur de courant.

Par exemple, l'étage d'ajustement des niveaux de courant peut être constitué de transistors bipolaires polarisés de manière classique et connectés aux sorties d'informations / ordres de l'unité de traitement, la régulation étant obtenue par une résistance raccordée au collecteur du transistor.

L'unité de traitement donne une information transformable en un niveau de courant constituant le code de cette information, à charge pour les étages précités de fournir le niveau de courant régulé correspondant.

Pour que le décodage des informations en provenance du bus, c'est-à-dire pour que les niveaux de tension envoyés par le produit principal soient correctement décodés, la tension du bus de liaison est disponible à l'entrée d'un étage de mesure du niveau de tension, dont la ou les sorties est (sont) raccordée(s) à l'unité de traitement du produit secondaire.

Selon une configuration possible, ledit étage de mesure est constitué de transistors bipolaires alimentés par des ponts de résistances et saturables individuellement selon le niveau de tension disponible sur le bus d'une part et les valeurs des résistances de chaque pont d'autre part, les sorties des transistors étant raccordées à l'unité de traitement.

Là encore, ce sont les valeurs des résistances qui déterminent la lecture d'un seul niveau de tension par montage à transistor.

De préférence, chaque produit secondaire comporte, en sortie du bus de liaison, un lecteur de polarisation relié à l'unité de traitement. Il est par conséquent possible de détecter le sens de branchement des deux fils du bus au produit secondaire. Cette information peut d'ailleurs être utilisée comme une donnée d'entrée supplémentaire pour l'unité de traitement du produit secondaire, un branchement dans un sens pouvant être interprété comme un ordre de fonctionnement selon un mode, le branchement inverse étant décodé comme une demande de fonctionnement dans un autre mode.

Ce lecteur de polarisation peut par exemple consister en un pont de deux résistances raccordé entre les deux fils du bus, une connexion à l'unité de traitement étant reliée entre lesdites résistances. Ce pont résistif permet l'adaptation de la tension du bus à un niveau acceptable par l'unité de traitement. Suivant la polarisation, une tension est alors présente ou non sur l'entrée de polarisation de l'unité de traitement.

Un pont de diode est par ailleurs connecté en sortie du bus de liaison, à des fins de dépolarisation du branchement du produit secondaire.

Cette fonction de dépolarisation de la tension du bus est indéniablement utile, car les fils du bus peuvent alors être raccordés sans se préoccuper de leur sens de branchement : le produit secondaire est fonctionnel dans les deux cas possibles de raccordement.

La sortie dépolarisée du pont de diode peut ensuite être connectée à un régulateur de tension dont la sortie est elle-même raccordée à l'unité de traitement. La source de tension que constitue ce régulateur permet d'obtenir une tension d'alimentation de l'unité de traitement qui soit régulée, à partir de la tension du bus dépolarisé, alors même que celle-ci varie en fonction des ordres envoyés par le produit central au produit secondaire.

L'invention va à présent être décrite plus en détails, en référence aux différentes figures annexées, pour lesquelles :
- la figure 1 montre un schéma bloc simplifié représentant très schématiquement le fonctionnement de l'invention ;
- la figure 2 représente un schéma bloc plus détaillé illustrant le fonctionnement du produit central et d'un produit secondaire ;
- la figure 3 montre une solution électronique de fonctionnement du produit central ; et
- la figure 4 illustre une possibilité de fonctionnement électronique d'un produit secondaire.

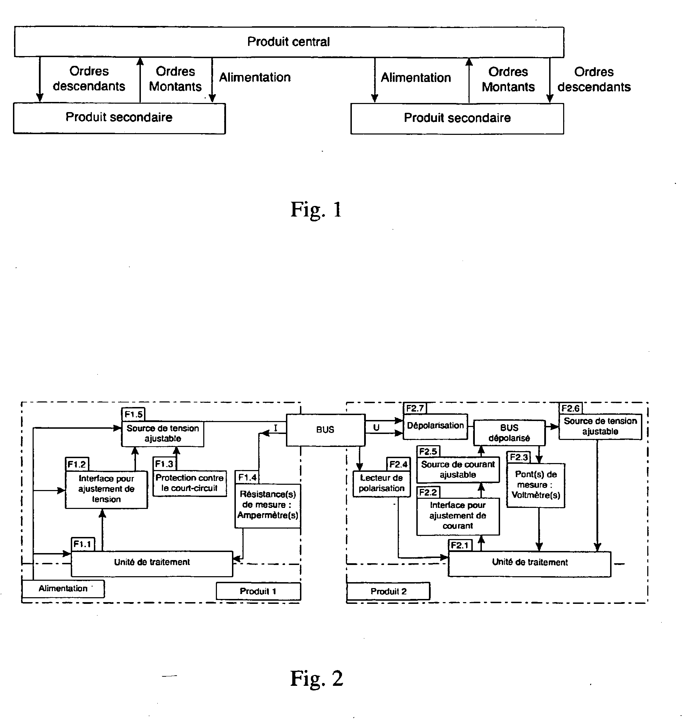

En référence à la figure 1, le but de l'invention est de pouvoir faire transiter des informations entre un produit central et des produits secondaires, à l'aide d'un bus bifilaire prenant en compte, pour chaque liaison entre le produit central et un produit secondaire, des informations / ordres descendants émanant du produit central, des informations / ordres montants issus du produit secondaire, l'alimentation du produit secondaire étant enfin assurée par le produit central.

Ce bus de téléalimentation à deux fils apparaît plus clairement en figure 2, dans laquelle le principe de fonctionnement du produit central et des produits secondaires est détaillé. Ainsi, l'unité de traitement F1.1 du produit central envoie ou reçoit des informations / ordres vers le produit secondaire, ou en provenance de celui-ci, en fonction de paramètres par exemple en provenance de capteurs d'horloges, etc. Le système de l'invention peut par exemple être utilisé dans le domaine de la domotique pour faire fonctionner un système de chauffage / climatisation dans une maison. L'unité de traitement F1.1 du produit central envoie ces informations sur le bus via des niveaux de tension. C'est la raison pour laquelle un étage d'ajustement de tension F1.2, permettant de coder l'information en niveaux de tension, est disposé entre l'unité de traitement F1.1 et un étage de régulation de tension F1.5, qui constitue en fait la source de tension ajustable pour le bus.

L'interface F1.2 permet donc, à partir d'ordres reçus par l'unité de traitement F1.1, de fournir des niveaux de tension de référence à la source de tension ajustable F1.5, sachant qu'un niveau de tension doit correspondre à un ordre spécifique émanant de l'unité de traitement F1.1.

Le produit central comprend également un étage F1.3 de protection contre les courts-circuits et les surcharges. Cette fonction permet de limiter le courant en cas de court-circuit sur le bus, empêchant ainsi toute dégradation du système.

Par ailleurs, le produit central doit pouvoir décoder des informations en provenance du bus, et émanant initialement d'un produit secondaire : c'est la fonction de l'étage F1.4, agissant à la manière ampèremètre pour lire le courant (ou niveau de courant) consommé sur le bus, puis le convertir en un niveau de tension compréhensible par l'unité de traitement F1.1.

Comme on l'a mentionné auparavant, le produit central est également doté d'une alimentation, alimentation qui permet son fonctionnement ainsi que celui des produits secondaires auxquels il est relié.

Le produit secondaire comporte également une unité de traitement F2.1 qui envoie ou reçoit des informations / ordres vers le produit central ou en provenance de celui-ci, également fonctions de paramètres par exemple provenant de capteurs, d'horloges, etc.

Les informations étant envoyées sur le bus sous forme de niveau de courant, un étage F2.2 sert d'interface d'ajustement pour le courant, autrement dit d'étage d'ajustement du niveau de courant qui permet, à partir des ordres reçus de l'unité de traitement F2.1, de fournir différents niveaux de courant de référence à un étage de régulation du courant F2.5 qui sert de source de courant ajustable pour le bus. Là encore, un niveau de courant correspond à un ordre spécifique.

Les informations en provenance du produit central sont envoyées à l'unité de traitement F2.1 du produit secondaire via un étage de mesure du niveau de tension F2.3, qui est en réalité un pont de mesure agissant comme un voltmètre de lecture du niveau de tension pour l'unité de traitement F2.1.

Cet étage est en fait disposé en aval d'un étage de dépolarisation du bus F2.7 permettant un raccordement du bus au produit secondaire sans se préoccuper du sens de branchement. Un lecteur de polarisation F2.4 placé en amont permet par ailleurs la lecture du sens de branchement des deux fils du bus, information qui peut être utilisée comme donnée d'entrée pour l'unité de traitement F2.1. Par exemple, un sens de branchement peut signifier que le produit secondaire est paramétré en mode chauffage, alors que l'autre sens de branchement indique au contraire une utilisation en mode climatisation.

Enfin, une source de tension F2.6 est prévue pour réguler la tension d'alimentation de l'unité de traitement F2.1 à partir de la tension bus, tension qui varie en fonction des ordres envoyés par le produit central au produit secondaire, lesquels sont transmis sous forme de niveaux de tension.

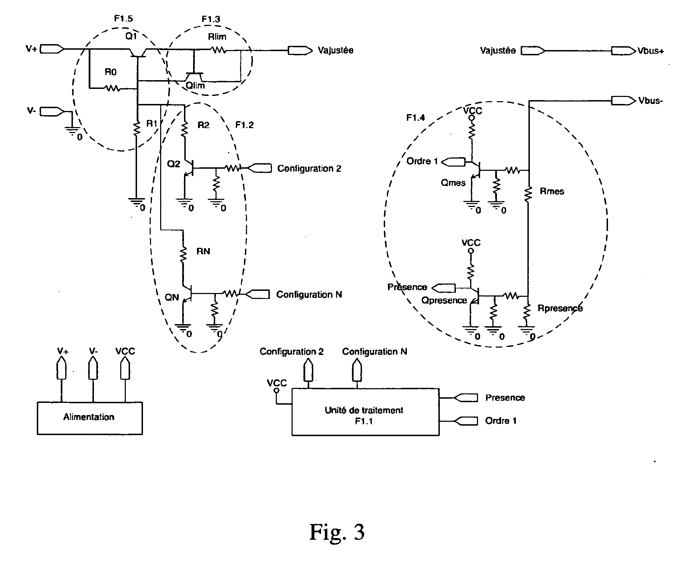

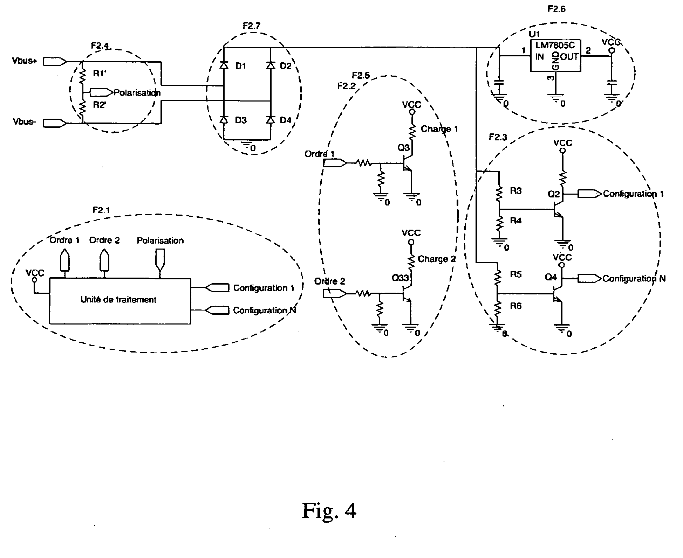

Les figures 3 et 4 donnent des exemples de circuits électroniques utilisables pour les différents étages envisagés auparavant. Les ordres émanant de l'unité de traitement F1.1 du produit central apparaissant en figure 3 sont disponibles sur des sorties *configuration 2* jusqu'à *configuration N.* Chacune des ces sorties est connectée à un étage à transistor bipolaire Q2 à QN. Selon la sortie activée, et par conséquent selon le transistor Q2 à QN qui devient passant, une résistance R2 à RN est positionnée en parallèle à la résistance R1 du pont résistif R0 / R1 du montage ballast F1.5 qui constitue l'étage de régulation de tension. Ce pont résistif constitué par R0 et R1 fournit au transistor Q1 une référence de tension. Cette référence constitue d'ailleurs en soi un premier code, c'est-à-dire un premier niveau de tension qui indique au produit secondaire qu'il doit se positionner dans une première configuration préprogrammée.

Un étage de protection F1.3 est disposé sur la branche positive du bus (V ajusté = Vbus+). Il fonctionne de la manière suivante : la résistance Rlim lit le courant fourni sur le bus. Dans l'hypothèse d'un court-circuit ou d'une surcharge, la tension à ses bornes augmente, et le transistor Qlim se sature. La base du transistor Q1 est alors reliée à la masse, ce qui implique une chute de la tension du bus, et une limitation du courant de court-circuit. Il est bien entendu possible de placer cet étage sur la branche négative du bus, avec un niveau qui doit dans ce cas être compatible avec le niveau des entrées de l'unité de traitement F1.1, qui peut par ce biais être informé du court-circuit ou de la surcharge.

L'étage F1.4 permet de lire le niveau de courant véhiculé par le bus, c'est-à-dire les informations en provenance des produits secondaires. Ces informations sont ensuite transformées en niveau de tension compatible avec le fonctionnement de l'unité de traitement F1.1.

La lecture du courant circulant sur le bus se fait ici au travers des résistances Rmes et Rprésence. Ainsi, si aucun courant n'est présent, la tension aux bornes de Rprésence est nulle. Le transistor Qprésence est bloqué. L'unité de traitement F1.1 détecte un niveau haut sur son entrée *présence.* A l'inverse, si un courant circule, cette tension est non nulle et entraîne la conduction du transistor Qprésence : l'unité de traitement voit alors un niveau bas sur son entrée *présence* et donc la présence ou l'absence d'un produit secondaire.

De la même manière, en fonction du niveau de courant consommé sur le bus, la tension aux bornes de Rmes varie. Si ce niveau est suffisant pour saturer Qmes, l'unité de traitement voit un niveau bas sur son entrée *ordre* 1. Dans l'hypothèse inverse, elle voit un niveau haut. Elle peut ainsi savoir quel ordre lui donne le produit secondaire.

La figure 3 ne représente que deux niveaux de mesure. En réalité, il est tout à fait possible d'ajouter autant de niveaux de détection que l'on a d'ordres différents à transmettre.

En référence à la figure 4, l'unité de traitement F2.1 reçoit un certain nombre de données / informations en provenance du bus, et à titre principal les informations / ordres provenant de l'unité de traitement F1.1 du produit principal. On y retrouve, cette fois en entrée, les informations *configuration 1* à *configuration* N dont il a été fait état auparavant dans le produit central.

En sortie du bus, un étage F2.4 permet la lecture de la polarisation à l'aide d'un pont résistif constitué des résistances R1', R2'. Ce pont permet l'adaptation de la tension à un niveau adéquat pour l'unité de traitement F2.1. L'information est collectée au niveau de ce pont, et envoyée à l'unité de traitement F2.1. Comme on l'a évoqué auparavant, cette information peut être utilisée comme donnée d'entrée, par exemple pour donner un ordre supplémentaire de configuration.

En sortie de l'étage de lecture de polarisation F2.4, un étage de dépolarisation F2.7, constitué d'un pont de diode D1 à D4 classique, permet d'obtenir une dépolarisation du branchement.

Le signal véhiculé par le bus est envoyé à des ponts résistifs R3 // R4 et R5//R6, qui saturent ou non les transistors Q2 et Q4 en fonction du niveau de la tension du bus. Selon le transistor qui devient passant, l'unité de traitement F2.1 sait dans quelle configuration elle doit travailler, puisque l'ordre arrive sur son entrée *configuration* correspondante.

Les informations / ordres émis par l'unité de traitement F2.1 du produit secondaire, disponibles sur les sorties *ordre 1, ordre 2* à *ordre N* sont également envoyées vers un transistor Q3, Q33 polarisé. Ces transistors constituent l'étage d'ajustement F2.2 et leurs charges résistives (charge 1, charge 2) disposées entre une source de tension régulée Vcc et le collecteur du transistor Q3, Q33 constituent l'étage de régulation de courant F2.5 ou source de courant ajustable permettant d'envoyer des niveaux de courant régulé vers le bus.

La source de courant est en fait constituée d'une ou plusieurs résistances que l'on vient connecter sur la source de tension régulée Vcc. Le niveau de courant peut être augmenté ou diminué en mettant en parallèle plusieurs résistances, en vue de multiplier les niveaux de courant sur le bus, et donc les ordres disponibles.

Un composant régulateur de tension apparaît à l'étage F2.6, constituant la source de tension ajustable permettant l'alimentation de l'unité de traitement F2.1 (en l'absence d'alimentation dans le produit secondaire).

Les circuits apparaissant en figures 3 et 4 sont bien entendu des exemples possibles, qui ne sont pas limitatifs de l'invention. Dans plusieurs cas, et notamment lors de l'utilisation d'une pluralité d'étages à transistors, il a été mentionné que l'on peut le cas échéant les remplacer par des convertisseurs analogiques / digitaux.

Globalement, le fonctionnement est le suivant : lorsque le produit central émet un ordre N vers le produit secondaire, l'unité de traitement F1.1 paramètre l'interface d'ajustement de tension F1.2 afin qu'il présente une tension de référence V₁ₙ à la source de tension ajustable F1.5. Celle-ci positionne alors la tension du bus à une valeur V_{busn}. Cette tension est ensuite dépolarisée par l'étage F2.7, et transposée à un niveau de tension V₂ₙ par l'unité de traitement F2.1 du produit secondaire. L'ordre n est alors est exécuté par l'unité de traitement F2.1 du produit secondaire.

Lorsque, à l'inverse, le produit secondaire émet un ordre M vers le produit principal, l'unité de traitement F2.1 paramètre l'interface d'ajustement de courant F2.2 afin que la source de courant F2.5 consomme un courant I₂ₘ sur le bus. Le courant est alors lu par une résistance de mesure apparaissant à l'étage F1.4 et transposé à un niveau de tension V₁ₘ compréhensible par l'unité de traitement F1.1 du produit central. L'ordre m est alors exécuté par ladite unité de traitement F1.1.

Les avantages de la solution de l'invention sont multiples. Ainsi, grâce à l'étage F1.4, il est possible de détecter très facilement si un produit secondaire est raccordé au produit central par le bus. L'unité de traitement F1.1 peut alors être paramétrée en conséquence : si le produit secondaire n'est pas connecté, aucun courant n'est lu par la résistance Rprésence. A l'inverse, si le produit secondaire est raccordé, il y a toujours un courant minimum, quel que soit le courant consommé par la source de courant de l'étage F2.5. Ce courant minimum est lu par cette même résistance.

Par ailleurs, la transmission des ordres se faisant de façon analogique, les états sur le bus sont statiques. Les protections à mettre en oeuvre pour immuniser la communication des perturbations extérieures sont très simples et peu coûteuses. Il suffit en effet de mettre des dispositifs anti-rebond. En plus, dans le système de l'invention, aucune précision de quelque ordre que ce soit n'est requise, et il n'y a pas nécessité de disposer d'une horloge stable. Par conséquent, des périphériques souvent coûteux tels que des UART, USART, timers, etc, ne sont pas nécessaires pour la gestion de la communication. Les ressources mémoires des unités de traitement F1.1 et F1.2, pour la gestion de l'ensemble du système, peuvent dès lors être considérablement allégées.

## Revendications

1. Système électronique d'alimentation et de communication à bus de liaison entre un produit central et au moins un produit secondaire, le produit central fournissant l'alimentation et des informations / ordres descendants à chaque produit secondaire, qui envoient des informations / ordres montants au produit central, tel que :
- le bus électronique comporte deux fils;
- chaque produit comporte une unité de traitement programmable F1.1,F2.1;
- les informations / ordres provenant de l'unité de traitement F1.1 du produit central sont communiqués en niveaux de tensions sur le bus vers chaque produit secondaire ; et
- les informations / ordres émanant de l'unité de traitement F2.1 de chaque produit secondaire sont émis vers le bus en niveaux de courant à destination du produit central.
**caractérisé en ce que** le bus de liaison est relié à l'alimentation du produit central via un étage de régulation de tension F1.5 dont le niveau de tension en sortie dépend d'un étage d'ajustement F1.2 consistant en des transistors bipolaires (Q2 ... QN) dont les bases sont connectées à des sorties distinctes de l'unité de traitement F1.1 du produit central, qui comporte un étage de lecture des informations / ordres F1.4 du bus de liaison en provenance de chaque produit secondaire, ledit étage de lecture comprenant un étage de détection de présence du courant et d'au moins une autre information / ordre émanant d'un produit secondaire doté d'un nombre de transistors bipolaires (Qmes, Qprésence, ...) égal au nombre de niveaux de courant à détecter, dont les sorties sont connectées aux entrées correspondantes (présence, ordre 1 ...) de l'unité de traitement F1.1.

2. Système d'alimentation et de communication selon la revendication précédente, **caractérisé en ce que** l'étage de régulation de tension F1.5 est constitué d'un montage ballast à transistor bipolaire Q1 dont le collecteur est relié à l'alimentation, un pont de résistances (R0, R1) étant placé entre le collecteur et la base d'une part, la base et la masse d'autre part.

3. Système d'alimentation et de communication selon la revendication précédente, **caractérisé en ce que** l'étage d'ajustement F1.2 comporte des résistances de charge (R2 ... RN) distinctes connectées en parallèle à la base du transistor Q1 du montage ballast.

4. Système d'alimentation et de communication des revendications précédentes, **caractérisé en ce qu'**il comporte un étage F1.3 de protection contre les surcharges et courts-circuits.

5. Système d'alimentation et de communication selon l'une des revendications 2 et 3, **caractérisé en ce qu'**il comporte un étage de protection F1.3 constitué d'une résistance Rlim connectée à l'émetteur du transistor Q1 du montage ballast, et placée entre la base et l'émetteur d'un transistor bipolaire Qlim dont le collecteur est raccordé à la base du transistor Q1 dudit montage ballast.

6. Système d'alimentation et de communication selon la revendication 1, **caractérisé en ce que** l'étage de régulation de tension F1.5 peut être constitué d'une diode Zener ou d'un composant régulateur de tension.

7. Système d'alimentation et de communication selon l'une des revendications précédentes, **caractérisé en ce que** les bases des transistors de l'étage de détection sont connectées pour chaque transistor en amont d'une résistance (Rmes, Rprésence, ...) appartenant à une succession de résistances connectées en séries à un fil du bus de liaison.

8. Système d'alimentation et de communication selon l'une des revendications précédentes, **caractérisé en ce que** l'étage de lecture des informations / ordres F1.4 provenant des produits secondaires consiste en une résistance connectée au bus de liaison associée à un convertisseur analogique numérique dont la sortie est raccordée à l'unité de traitement.

9. Système d'alimentation et de communication selon l'une quelconque des revendications précédentes, **caractérisé en ce que** les sorties d'informations / ordres de l'unité de traitement F2.1 de chaque produit secondaire sont reliées au bus de liaison via un étage d'ajustement F2.2 du niveau de courant, lequel est ensuite régulé par un régulateur de courant F2.5.

10. Système d'alimentation et de communication selon la revendication précédente, **caractérisé en ce que** l'étage d'ajustement F2.2 du niveau de courant est constitué de transistors bipolaires polarisés (Q3, Q33 ...) connectés aux sorties d'informations / ordres de l'unité de traitement, la régulation F2.5 étant obtenue par une résistance (charge 1, charge 2 ...) raccordée au collecteur du transistor (Q3, Q33 ... ).

11. Système d'alimentation et de communication selon l'une des revendications précédentes, **caractérisé en ce que** la tension du bus de liaison est disponible à l'entrée d'un étage de mesure du niveau de tension F2.1, dont la ou les sorties est (sont) raccordée(s) à l'unité de traitement F2.1.

12. Système d'alimentation et de communication selon la revendication précédente, **caractérisé en ce que** ledit étage de mesure F2.3 est constitué de transistors bipolaires (Q2, Q4 ...) alimentés par des ponts de résistances (R3, R4 ; R5, R6 ; ...) et saturables individuellement selon le niveau de tension disponible sur le bus d'une part et les valeurs des résistances (R3, R4 ; R5, R6 ; ...) de chaque pont d'autre part, les sorties des transistors (Q2, Q3 ...) étant raccordées à l'unité de traitement F2.1.

13. Système d'alimentation et de communication selon l'une des revendications précédentes, **caractérisé en ce que** le produit secondaire comporte, en sortie du bus de liaison, un lecteur de polarisation F2.4 relié à l'unité de traitement F2.1.

14. Système d'alimentation et de communication selon la revendication précédente, **caractérisé en ce qu'**un pont de deux résistances (R1'. R2') est raccordé entre les deux fils du bus, une connexion à l'unité de traitement F2.1 étant reliée entre lesdites résistances (R1', R2').

15. Système d'alimentation et de communication selon l'une quelconque des revendications précédentes, **caractérisé en ce qu'**un pont de diode F2.7 est connecté en sortie du bus de liaison, à des fins de dépolarisation du branchement du produit secondaire.

16. Système d'alimentation et de communication selon la revendication précédente, **caractérisé en ce que** la sortie dépolarisée du pont de diodes F2.7 est connectée à un régulateur de tension F2.6 dont la sortie est connectée à l'unité de traitement F2.1.

## Claims

1. An electronic supply and communication system having a connecting bus between a center product and at least one secondary product, the center product providing the supply and downlink information/orders to each secondary product sending uplink information/orders to the center product, such as:
- the electronic bus comprises two wires;
- each product comprises a programmable processing unit F1.1, F2.1;
- the information/orders coming from the processing unit F1.1 of the center product are communicated as voltage levels on the bus to each secondary product; and
- the information/orders originating from the processing unit F2.1 of each secondary product are transmitted to the bus as current levels for the center product,
**characterized in that** the connecting bus is linked to the supply of the center product via a voltage regulation stage F1.5 the output voltage level of which depends on an adjusting stage F1.2 consisting of bipolar transistors (Q2 ... QN) the bases of which are connected to different outputs of the processing unit F1.1 of the center product, which comprises a stage for reading the information/orders F1.4 of the connecting bus coming from each secondary product, said reading stage including a stage for detecting the presence of current and at least one other piece of information/order originating from a secondary product provided with a number of bipolar transistors (Qmes, Qpresence, ...) equal to the number of current levels to be detected, the outputs of which are connected to the corresponding inputs (presence, order 1 ...) of the processing unit F1.1.

2. The supply and communication system according to the preceding claim, **characterized in that** the voltage regulation stage F1.5 consists of a ballast circuit having a bipolar transistor Q1 the collector of which is linked to the supply, a resistance bridge (R0, R1) being placed between the collector and the base on the one hand, and the base and ground on the other hand.

3. The supply and communication system according to the preceding claim, **characterized in that** the adjusting stage F1.2 includes different load resistors (R2 ... RN) connected in parallel to the base of the transistor Q1 of the ballast circuit.

4. The supply and communication system according to the preceding claims, **characterized in that** it comprises a stage F1.3 for protection from overloads and short-circuits.

5. The supply and communication system according to any of claims 2 and 3, **characterized in that** it comprises a protection stage F1.3 consisting of a resistor Rlim connected to the emitter of the transistor Q1 of the ballast circuit, and placed between the base and the emitter of a bipolar transistor Qlim the collector of which is connected to the base of the transistor Q1 of said ballast circuit.

6. The supply and communication system according to claim 1, **characterized in that** the voltage regulation stage F1.5 can consist of a Zener diode or a voltage regulating component.

7. The supply and communication system according to any of the preceding claims, **characterized in that** the bases of the transistors of the detecting stage are connected for each transistor upstream of a resistor (Rmes, Rpresence, ...) belonging to a sequence of resistors series connected to a wire of the connecting bus.

8. The supply and communication system according to any of the preceding claims, **characterized in that** the stage for reading the information/orders F1.4 from the secondary products consists of a resistor connected to the connecting bus associated with an analog/digital converter the output of which is connected to the processing unit.

9. The supply and communication system according to any of the preceding claims, **characterized in that** the information/order outputs of the processing unit F2.1 of each secondary product are linked to the connecting bus via a stage F2.2 for adjusting the current level, which is then regulated by a current regulator F2.5.

10. The supply and communication system according to the preceding claim, **characterized in that** the stage F2.2 for adjusting the current level consists of polarized bipolar transistors (Q3, Q33, ...) connected to the information/order outputs of the processing unit, regulation F2.5 being obtained via a resistor (load 1, load 2, ...) connected to the collector of the transistor (Q3, Q33, ...).

11. The supply and communication system according to any of the preceding claims, **characterized in that** the voltage of the connecting bus is available at the input of a stage for measuring the voltage level F2.1, the output(s) of which is/are connected to the processing unit F2.1.

12. The supply and communication system according to the preceding claim, **characterized in that** said measuring stage F2.3 consists of bipolar transistors (Q2, Q4, ...) supplied by resistance bridges (R3, R4; R5, R6; ...) and which can be saturated individually according to the voltage level available on the bus on the one hand and the values of the resistors (R3, R4; R5, R6; ...) of each bridge on the other hand, the outputs of the transistors (Q2, Q3, ...) being connected to the processing unit F2.1.

13. The supply and communication system according to any of the preceding claims, **characterized in that** the secondary product comprises, at the output of the connecting bus, a polarization reader F2.4 linked to the processing unit F2.1.

14. The supply and communication system according to the preceding claim, **characterized in that** a bridge of two resistors (R1', R2') is connected between the two wires of the bus, a connection to the processing unit F2.1 being linked between said resistors (R1', R2').

15. The supply and communication system according to any of the preceding claims, **characterized in that** a diode bridge F2.7 is connected at the output of the connecting bus, for depolarizing the branch of the secondary product.

16. The supply and communication system according to the preceding claim, **characterized in that** the depolarized output of the diode bridge F2.7 is connected to a voltage regulator F2.6 the output of which is connected to the processing unit F2.1.

## Patentansprüche

1. Elektronisches Versorgungs- und Kommunikationssystem mit Verbindungsbus zwischen einem Zentralprodukt und mindestens einem Nebenprodukt, wobei das Zentralprodukt die Versorgung und Abwärts-Informationen/Befehle an jedes Nebenprodukt liefert, das dem Zentralprodukt Aufwärts-Informationen/Befehle sendet, wie etwa:
- der elektronische Bus umfasst zwei Drähte;
- jedes Produkt verfügt über eine programmierbare Verarbeitungseinheit F1.1, F2.1;
- die Informationen/Befehle, die aus der Verarbeitungseinheit F1.1 des Zentralproduktes stammen, werden jedem Nebenprodukt als Spannungspegel auf dem Bus mitgeteilt; und
- die Informationen/Befehle, die von der Verarbeitungseinheit F2.1 jedes Nebenprodukts ausgehen, werden an den Bus als Strompegel für das Zentralprodukt übertragen,
**dadurch gekennzeichnet, dass** der Verbindungsbus mit der Versorgung des Zentralprodukts über eine Spannungsregelstufe F1.5 verbunden ist, deren Ausgangsspannungspegel von einer Einstellstufe F1.2 abhängig ist, die aus bipolaren Transistoren (Q2 ... QN) besteht, deren Basen an verschiedene Ausgänge der Verarbeitungseinheit F1.1 des Zentralprodukts angeschlossen sind, das eine Stufe zum Lesen der Informationen/Befehle F1.4 des Verbindungsbusses aus jedem Nebenprodukt umfasst, wobei die Lesestufe eine Stufe zum Erfassen des Vorliegens von Strom und mindestens einer anderen Information/ eines anderen Befehls, die bzw. der von einem Nebenprodukt ausgeht, das mit einer Anzahl von bipolaren Transistoren (Qmes, Qpräsenz, ...) versehen ist, die gleich der Anzahl der zu erfassenden Strompegel ist, umfasst, deren Ausgänge an die entsprechenden Eingänge (Präsenz, Befehl 1 ...) der Verarbeitungseinheit F1.1 angeschlossen sind.

2. Versorgungs- und Kommunikationssystem nach dem vorhergehenden Anspruch, **dadurch gekennzeichnet, dass** die Spannungsregelstufe F1.5 aus einer Vorschaltschaltung mit einem bipolaren Transistor Q1 besteht, dessen Kollektor mit der Versorgung verbunden ist, wobei eine Widerstandsbrücke (R0, R1) zwischen dem Kollektor und der Basis einerseits und der Basis und Masse andererseits angeordnet ist.

3. Versorgungs- und Kommunikationssystem nach dem vorhergehenden Anspruch, **dadurch gekennzeichnet, dass** die Einstellstufe F1.2 verschiedene Lastwiderstände (R2 ... RN) umfasst, die zur Basis des Transistors Q1 der Vorschaltschaltung parallel geschaltet sind.

4. Versorgungs- und Kommunikationssystem nach den vorhergehenden Ansprüchen, **dadurch gekennzeichnet, dass** es eine Stufe F1.3 zum Schutz vor Überlasten und Kurzschlüssen umfasst.

5. Versorgungs- und Kommunikationssystem nach einem der Ansprüche 2 und 3, **dadurch gekennzeichnet, dass** es eine Schutzstufe F1.3 umfasst, die aus einem Widerstand Rlim besteht, der an den Emitter des Transistors Q1 der Vorschaltschaltung angeschlossen ist und zwischen der Basis und dem Emitter eines bipolaren Transistors Qlim angeordnet ist, dessen Kollektor mit der Basis des Transistors Q1 der Vorschaltschaltung verbunden ist.

6. Versorgungs- und Kommunikationssystem nach Anspruch 1, **dadurch gekennzeichnet, dass** die Spannungsregelstufe F1.5 aus einer ZenerDiode oder einem Spannungsregelbauteil bestehen kann.

7. Versorgungs- und Kommunikationssystem nach einem der vorhergehenden Ansprüche, **dadurch gekennzeichnet, dass** die Basen der Transistoren der Erfassungsstufe für jeden Transistor oberhalb eines Widerstandes (Rmes, Rpräsenz, ...) angeschlossen sind, der zu einer Folge von Widerständen gehört, die an einen Draht des Verbindungsbusses in Reihe geschaltet sind.

8. Versorgungs- und Kommunikationssystem nach einem der vorhergehenden Ansprüche, **dadurch gekennzeichnet, dass** die Stufe zum Lesen der Informationen/Befehle F1.4, die aus den Nebenprodukten stammen, aus einem Widerstand besteht, der an den Verbindungsbus angeschlossen ist, der mit einem Analog/Digital-Wandler verknüpft ist, dessen Ausgang mit der Verarbeitungseinheit verbunden ist.

9. Versorgungs- und Kommunikationssystem nach einem der vorhergehenden Ansprüche, **dadurch gekennzeichnet, dass** die Informations-/Befehlsausgänge der Verarbeitungseinheit F2.1 jedes Nebenprodukts mit dem Verbindungsbus über eine Einstellstufe F2.2 des Strompegels, der dann von einem Stromregler F2.5 geregelt wird, verbunden sind.

10. Versorgungs- und Kommunikationssystem nach dem vorhergehenden Anspruch, **dadurch gekennzeichnet, dass** die Einstellstufe F2.2 des Strompegels aus polarisierten bipolaren Transistoren (Q3, Q33, ...) besteht, die an die Informations-/Befehlsausgänge der Verarbeitungseinheit angeschlossen sind, wobei die Regelung F2.5 durch einen Widerstand (Last 1, Last 2, ...) erzielt wird, der mit dem Kollektor des Transistors (Q3, Q33, ...) verbunden ist.

11. Versorgungs- und Kommunikationssystem nach einem der vorhergehenden Ansprüche, **dadurch gekennzeichnet, dass** die Spannung des Verbindungsbusses am Eingang einer Messstufe des Spannungspegels F2.1 zur Verfügung steht, deren Ausgang oder Ausgänge mit der Verarbeitungseinheit F2.1 verbunden ist bzw. sind.

12. Versorgungs- und Kommunikationssystem nach dem vorhergehenden Anspruch, **dadurch gekennzeichnet, dass** die Messstufe F2.3 aus bipolaren Transistoren (Q2, Q4, ...) besteht, die über Widerstandsbrücken (R3, R4; R5, R6; ...) versorgt werden und individuell einerseits gemäß dem Spannungspegel, der auf dem Bus verfügbar ist und andererseits den Werten der Widerstände (R3, R4; R5, R6; ...) jeder Brücke gesättigt werden können, wobei die Ausgänge der Transistoren (Q2, Q3, ...) mit der Verarbeitungseinheit F2.1 verbunden sind.

13. Versorgungs- und Kommunikationssystem nach einem der vorhergehenden Ansprüche, **dadurch gekennzeichnet, dass** das Nebenprodukt am Ausgang des Verbindungsbusses eine Polarisationslesevorrichtung F2.4 umfasst, die mit der Verarbeitungseinheit F2.1 verbunden ist.

14. Versorgungs- und Kommunikationssystem nach dem vorhergehenden Anspruch, **dadurch gekennzeichnet, dass** eine Brücke aus zwei Widerständen (R1', R2') zwischen den beiden Drähten des Bus angeschlossen ist, wobei ein Anschluss an die Verarbeitungseinheit F2.1 zwischen den Widerständen (R1', R2') gelegt ist.

15. Versorgungs- und Kommunikationssystem nach einem der vorhergehenden Ansprüche, **dadurch gekennzeichnet, dass** eine Diodenbrücke F2.7 an den Ausgang des Verbindungsbusses zum Depolarisieren der Abzweigung des Nebenprodukts angeschlossen ist.

16. Versorgungs- und Kommunikationssystem nach dem vorhergehenden Anspruch, **dadurch gekennzeichnet, dass** der depolarisierte Ausgang der Diodenbrücke F2.7 an einen Spannungsregler F2.6 angeschlossen ist, dessen Ausgang an die Verarbeitungseinheit F2.1 angeschlossen ist.
